(19) Europäisches Patentamt
European Patent Office
Office européen des brevets

(11) Publication number: 0 207 967 B1

# (12) EUROPEAN PATENT SPECIFICATION

(45) Date of publication of the patent specification: 31.01.90

(51) Int. Cl.⁴: B 01 F 17/16, C 10 M 173/02 // (C10M173/02, 133:16, 133:56),(C10M173/02, 159:12), C10N40:08, C10N60:00

(21) Application number: 86900565.2

(22) Date of filing: 20.12.85

(86) International application number: PCT/US 85/02563

(87) International publication number: WO 86/03987 (17.07.86 Gazette 86/17)

## (54) DISPERSANT SALTS.

(30) Priority: 27.12.84 US 686786

(43) Date of publication of application: 14.01.87 Bulletin 87/3

(45) Publication of the grant of the patent: 31.01.90 Bulletin 90/5

(84) Designated Contracting States: AT BE CH DE FR GB IT LI NL SE

(56) References cited:
EP-A- 0 072 645
EP-A- 0 084 966
FR-A- 1 374 541
GB-A- 1 009 197

(73) Proprietor: The Lubrizol Corporation, 29400 Lakeland Boulevard, Wickliffe, Ohio 44092 (US)

(72) Inventor: QUINN, Robert, E., 11914 Brighton Avenue, Cleveland, OH 44111 (US)

(74) Representative: Crisp, David Norman et al, D. YOUNG & CO. 10 Staple Inn, London, WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

The present invention relates to aqueous dispersions containing a dispersant salt composition, containing a surfactant and a hydrophilic solvent, in an aqueous phase. More specifically, the salt is the reaction product of a sulfonic acid-free organic acid or a mineral acid with a phosphorus-fgree carboxylic solubilizer made by reacting a polycarboxylic acid acylating agent having at least one hydrocarbon-based substituent containing 30 to 500 carbon atoms thereon, and a poly(alkylenamine).

U.S. Patent No. 3 634 241 to Lowe relates to a composition, useful as a lubricating oil additive, obtained by first reacting a $C_{20}$ -$C_{400}$ aliphatic hydrocarbon succinic acid or derivative thereof which is capable of forming carboximide bonds with a $C_2$-$C_{30}$, $N_2$-$N_{10}$ alkylene polyamine to form a carboximide, and then reacting the carboximide with a $C_{12}$-$C_{40}$ hydrocarbon sulfonic acid. The product is a sulfonate salt.

U.S. Patent No. 3 725 434 to Elliott et al relates to the reaction product of polyalkylene amine sulfonic acids and an alkenylsuccinic anhydride/acid.

U.S. Patent No. 3 185 704 to Kahn et al relates to preparing formamides of mono-alkenyl succinimides through a condensation reaction.

U.S. Patent No. 3 452 002 to Brasch relates to an oil-soluble dispersant by the reaction of an aliphatic monocarboxylic acid, a dicarboxylic acid or a carboxylic acid anhydride with monomeric alkylene imine. An acid catalyst, for example, HCl can be used for the synthesis.

U.S. Patent No. 3 390 086 to O'Halloran discloses reaction products from an alkenylsuccinic acid, polyalkyleneamine and a second acid. An amide is formed.

U.S. Patent No. 3 352 788 to Conlisk relates to various types of detergents which act as liquid binders for activated carbon compositions.

U.S. Patent No. 4 439 491 to Wilson relates to protecting graphite or carbon against oxidation by application of a wetting agent.

U.S. Patent No. 3 948 784 to Krillic relates to a method of clarifying water-soluble lubricants used in industrial grinding and cutting using cationic polyelectrolytes.

U.S. Patent Nos. 3 341 454; 3 522 177; and 3 801 504 relate to the inclusion of a polyoxyalkylated phenol in a graphite-containing lubricant.

U.S. Patent No. 3 509 052 to Murphy relates to improved lubricating compositions containing a dispersant which is a derivative of a substituted succinic acid where the substituent contains at least 50 aliphatic carbon atoms and a demulsifier.

U.S. Patent No. 3 172 892 to LeSuer et al relates to a process for preparing an oil-soluble product useful as a dispersing agent in a lubricating composition, wherein the dispersant contains a substituted succinic acid or an anhydride therein.

U.S. Patent No. 3 502 677 to LeSuer relates to nitrogen containing and phosphorus-containing succinic derivatives used as additives in lubricating compositions.

U.S. Patent Nos. 4 447 348 and 4 448 703 relate to combinations of carboxylic solubilizers made by reacting N-(hydroxyl-substituted hydrocarbyl)amine with an acylating agent and containing surfactants therein.

The above prior art patents accordingly fail to teach or suggest an aqueous dispersible composition containing a dispersant salt and a surfactant or a hydrophilic organic solvent.

International Patent Specification No. WO 85/03709 (published 29th August 1985) discloses aqueous compositions comprising the reaction product of a carboxylic acid acylating agent, an amine containing at least one HN< group, and a phosphorus-containing organic acid. The aqueous compositions may contain a surfactant.

We have now found it possible to provide aqueous dispersions containing dispersant salt compositions having surfactants and water-soluble organic solvents therein which have good thermal stability. The dispersant compositions have been found to be useful in dispersing carbon blacks, pigments, organic fillers, and the like in aqueous systems.

In accordance with the invention, there is provided an aqueous dispersion, comprising:

water;

a dispersant salt composition comprising the reaction product of an acid (A) and a solubilizer (B), wherein;

(A) is a mineral acid or a sulfonic acid-free organic acid, and

(B) is a phosphorus-free carboxylic solubilizer made by reacting (B1) and (B2), wherein (B1) is polycarboxylic acid acylating agent having a hydrocarbon-based substituent containing 30 to 500 carbon atoms, and (B2) is a poly-(alkyleneamine); and

an additional component comprising a surfactant present in an amount of at least 5 parts by weight per hundred parts by weight of the dispersant salt composition, together with a hydrophilic organic solvent present in an amount of at least 5% by weight based on the weight of the dispersant salt composition.

Preferred features and embodiments of the invention are described below.

The dispersant salt compositions for use according to the invention are salts of phosphorus-free carboxylic solubilizers. The salts are made by the reaction of the carboxylic solubilizers with various acids. Although such acids are usually water-soluble, such a requirement is not necessary in that the pertinent requirement is that the dispersant salt be dispersible in an aqueous phase. The acid can be a sulfonic acid-free organic acid or a mineral acid capable of forming a substantially water-soluble dispersant salt. Examples of mineral acids include nitric acid, nitrous acid, sulfuric acid, sulfurous acid, phosphoric acid, phosphorous acid, hydrochloric acid, silicic acid, boric acid, perchloric acid, chloric acid, chlorous acid, hypochlorous acid, permanganic acid, chromic acid, dichromic acid, ortho-meta- and pyrophosphoric acid, hydrofluoric acid, hydrobromic acid, hydriodic acid, hydrosulfuric acid, with hydrochloric acid being preferred. The organic acids generally include poly- or monofunctional acids in order that they retain their water solubility. The sulfonic acid-free organic acids

generally have 1 to 10 carbon atoms with 1 to 4 carbon atoms being preferred and can be saturated or unsaturated aliphatic or aromatic. Examples of carboxylic acids include aliphatic carboxylic acids such as formic, acetic, propionic, butyric. Dicarboxylic acids can also be utilized such as oxalic, malonic, succinic, and glutaric. Moreover, unsaturated carboxylic acid such as maleic can also be utilized. Generally acetic acid, and formic are preferred.

The acylating agent used in marking the solubilizers (B) are well known to those of skill in the art and have been found to be useful as additives for lubricants and fuels and as intermediates for preparing the same. See, for example, the following U.S. Patents: 4 448 703; 4 447 348; 3 219 666; 3 272 746; 3 381 022; 3 254 025; 3 278 550; 3 288 714; 3 271 310; 3 373 111; 3 346 354; 3 272 743; 3 374 174; 3 307 928; and 3 394 179.

Generally, these carboxylic acid acylating agents are prepared by reacting an olefin polymer or chlorinated analog thereof with an unsaturated carboxylic acid or derivative thereof such as acrylic acid, fumaric acid, maleic anhydride. Often they are polycarboxylic acylating agents such as hydrocarbyl-substituted succinic acids and anhydrides. These acylating agents have at least one hydrocarbyl-based substituent of 30 to 500 carbon atoms. Generally, the substituent has up to 196 or 200 carbon atoms and desirably up to 100 carbon atoms.

As used herein, the terms «hydrocarbon-based», «hydrocarbon-based substituent» and the like denote a substituent having a carbon atom directly attached to the remainder of the molecule and having predominantly hydrocarbyl character within the context of this invention. Such substituents include the following:

(1) hydrocarbon substituents, that is, aliphatic (e.g., alkyl or alkenyl), alicyclic (e.g., cycloalkyl, cycloalkenyl) substituents, aromatic-, aliphatic- and alicyclic-substituted aromatic nuclei and the like as well as cyclic substituents wherein the ring is completed through another portion of the molecule (that is, any two indicated substituents may together form an alicyclic radical);

(2) substituted hydrocarbon substituents, that is, those substituents containing non-hydrocarbon radicals which, in the context of this invention, do not alter the predominantly hydrocarbyl substituent; those skilled in the art will be aware of such radicals (e.g., halo (especially chloro and fluoro), alkoxy, mercapto, alkylmercapto, nitro, nitroso, sulfoxy);

(3) hetero substituents, that is, substituents which will, while having predominantly hydrocarbyl character within the context of this invention, contain other than carbon present in a ring or chain otherwise composed of carbon atoms. Suitable heteroatoms will be apparent to those of skill in the art and include, for example, sulfur, oxygen, nitrogen and such substituents as e.g., pyridyl, furanyl, thiophenyl, imidazolyl are exemplary of these hetero substituents.

In general, no more than three radicals or heteroatoms and preferably no more than one, will be present for each ten carbon atoms in the hydrocarbon-based substituents. Typically, there will be no such radicals or heteroatoms in the hydrocarbon-based substituent and it will, therefore, be purely hydrocarbyl.

In general, the hydrocarbon-based substituents present in the acylating agents used in this invention are free from acetylenic unsaturation; ethylenic unsaturation, when present will generally be such that there is no more than one ethylenic linkage present for every ten carbon-to-carbon bonds in the substituent. The substituents are often completely saturated and therefore contain no ethylenic unsaturation.

As noted above, the hydrocarbon-based substituents present in the acylating agents of this invention may be derived from olefin polymers or chlorinated analogs thereof. The olefin monomers from which the olefin polymers are derived are polymerizable olefins and monomers characterized by having one or more ethylenic unsaturated group. They can be monoolefinic monomers such as ethylene, propylene, butene-1, isobutene and octene-1 or polyolefinic monomers (usually di-olefinic monomers such as butadiene-1,3 and isoprene). Usually these monomers are terminal olefins, that is, olefins characterized by the presence of the group $>C=CH_2$. However, certain internal olefins can also serve as monomers (these are sometimes referred to as medial olefins). When such medial olefin monomers are used, they normally are employed in combination with terminal olefins to produce olefin polymers which are interpolymers. Although the hydrocarbyl-based substituents may also include aromatic groups (especially phenyl groups) and alicyclic groups such as would be obtained from polymerizable cyclic olefins or alicyclic-substituted polymerizable cyclic olefins. The olefin polymers are usually free from such groups. Nevertheless, olefin polymers derived from such interpolymers of both 1,3-dienes and styrenes such as butadiene-1,3 and styrene or para (tertiary butyl) styrene are exceptions to this general rule.

Generally the olefin polymers are homo- or interpolymers of terminal hydrocarbyl olefins of 2 to 16 carbon atoms. A more typical class of olefin polymers is selected from homo- and interpolymers of terminal olefins of 2 to 6 carbon atoms, especially those of 2 to 4 carbon atoms.

Specific examples of terminal and medial olefin monomers which can be used to prepare the olefin polymers from which the hydrocarbon-based substituents are derived include ethylene, propylene, butene-1, butene-2, isobutene, pentene-1, hexene-1, heptene-1, octene-1, nonene-1, decene-1, pentene-2, propylene tetramer, diisobutylene, isobutylene trimer, butadiene-1,2, butadiene-1,3, pentadiene-1,2, pentadiene-1,3, isoprene, hexadiene-1,5, 2-chlorobutadiene-1,3, 2-methyl-heptene-1, 3-cyclohexylbutene-1, 3,3-dimethylpentene-1, styrenedivinylbenzene, vinylacetate allyl alcohol, 1-methylvinylacetate, acrylonitrile, ethylacrylate, ethylvinylether and methylvinylketone. Of these, the purely hydrocarbyl monomers are more typical and the terminal olefin monomers are especially typical.

Often the olefin polymers are poly(isobutene)s such as obtained by polymerization of a $C_4$ refinery

stream having a butene content of 35 to 75 percent by weight and an isobutene content of about 30 to about 60 percent by weight in the presence of a Lewis acid catalyst such as aluminum chloride or boron trifluoride. These polyisobutenes contain predominantly (that is, greater than 80% of the total repeat units) isobutene repeat units of the configuration

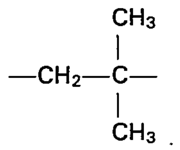

Typically, the hydrocarbyl-based substituent in the carboxylic acid acylating agent as used in the present invention is a hydrocarbyl, alkyl or alkenyl group of 30 to 500 carbon atoms which can be represented by the indicia «hyd». Useful acylating agents include substituted succinic acid agents containing hydrocarbyl-based substituents of 30-100 carbon atoms.

Often the agents (B1) used in marking the solubilizers (B) are substituted succinic acids or derivatives thereof which can be represented by the formula:

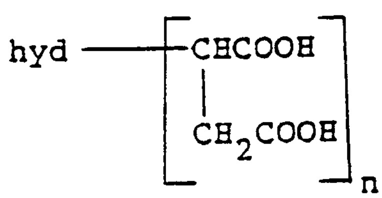

or 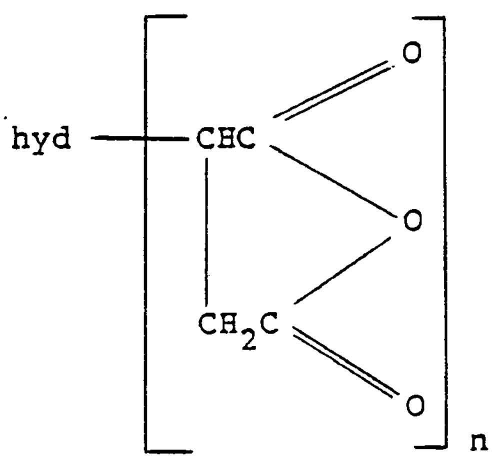

where n is an integer of from 1 to 4.0, and preferably is 1. Such succinic acid acylating agents can be made by the reaction of maleic anhydride, maleic acid, or fumaric acid with the aforedescribed olefin polymer, as is shown in the patents cited above. Generally, the reaction involves merely heating the two reactants at a temperature of 150° to 200°C. Mixtures of the aforesaid polymeric olefins, as well as mixtures of unsaturated mono- and dicarboxylic acids can also be used.

The B1 acylating agents are reacted with (B2) poly(alkyleneamine)s to produce the carboxylic solubilizer (B). Oftentime, the B1 acylating agent is coupled via the poly(alkyleneamine) compounds. In any event, it is an important requirement that the reacted product, that is, the carboxylic solubilizer (B) contains at least one free amine therein. By «free amine» it is meant that the amine group has a hydrogen thereon which can be displaced.

The polyamines from which the (B) products of this invention are derived include principally alkylene amines conforming for the most part to the formula

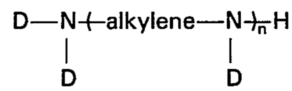

wherein n is an integer preferably from 1 to 10, D is a hydrogen or a substantially hydrocarbon preferably having up to 30 carbon atoms, and the «alkylene» group is preferably a lower alkylene group having 10 or less carbon atoms. The alkylene amines include principally methylene amines, ethylene amines, butylene amines, propylene amines, pentylene amines, hexylene amines, heptylene amines, octylene amines, other polymethylene amines, and also the cyclic and the higher homologues of such amines such as piperazines and aminoalkyl-substituted piperazines. They are exemplified specificially by: ethylene diamine, triethylene tetramine, propylene diamine, decamethylene diamine, octamethylene diamine, di(heptamethylene) triamine, tripropylene tetramine, tetraethylene pentamine, trimethylene diamine, pentaethylene hexamine, di(trimethylene)triamine, 2-heptyl-3-(2-aminopropyl)imidazoline, 4-methyl-imidazoline, 1,3-bis(2-aminoethyl)imidazoline, pyrimidine, 1-(2-aminopropyl)-piperazine, 1,4-bis(2-aminoethyl)piperazine, and 2-methyl-1--(2-aminobutyl)piperazine. Higher homologues such as are obtained by condensing two or more of the above-illustrated alkylene amines likewise are useful. In lieu of the above amines, mixtures of two or more are often utilized.

The ethylene amines are often used. They are described in some detail under the heading «Ethylene Amines» in Encyclopedia of Chemical Technology, Kirk and Othmer, Volume 5, pages 989-905, Interscience Publishers, New York (1950). Such compounds are prepared most conveniently by the reaction of an alkylene chloride with ammonia. The reaction results in the production of somewhat complex mixtures of alkylene amines, including cyclic condensation products such as piperazines. These mixtures find use in the process of this invention. On the other hand, quite satisfactory products may be obtained also by the use of pure alkylene amines. An especially useful alkylene amine for reasons of economy as well as effectiveness of the products derived therefrom is a mixture of ethylene amines prepared by the reaction of ethylene chloride and ammonia and having a composition which corresponds to that of tetraethylene pentamine.

Higher homologues such as are obtained by condensation of the above illustrated alkylene amines through amino radicals are likewise useful. It will be appreciated that condensation through amino radicals results in a higher amine accompanied with removal of ammonia.

The reaction of the acylating agent (B1) with the

poly(alkyleneamine) (B2) is generally carried out at a temperature of about 80°C to the decomposition temperature of the reaction compounds and/or products having the lowest such temperature. Typically, the reaction temperature is from 100°C to 300°C and preferably from 125°C to 250°C. Mixtures of aoylating agents are often utilized.

Generally, the ratio of acylating agent to the poly(alkyleneamine) is from 0.33 to 1.3 equivalents (B1) acylating agent per equivalent of (B2) amine. An equivalent of acylating agent (B1) can be determined by dividing its molecular weight on the number of carboxyl functions present. For example, a succinic acid anhydride or di(alkyl)ester acylating agent has an equivalent weight of one-half its molecular weight. An equivalent of amine is the amount of the (B2) amine corresponding to the total weight of amine divided by the total number of nitrogens present.

In addition to the acylating agent (B1) there can also be present in the solubilizer-forming reaction mixture one or more lower molecular weight mono- or poly-carboxylic acid acylating agents of 1 to less than 18 carbons such as fatty acids having 10 to 18 carbon atoms or a tetrapropenyl-substituted succinic anhydride. In such cases the moles of lower acylating agent present will be at least less than those of the acylating agent (B1) and the total equivalents of lower acylating agent plus acylating agent (B1) will still fall within the aforedescribed ratios.

Typical lower (MW) monocarboxylic acylating agents include saturated and unsaturated fatty acids, such as lauric acid, stearic acid, oleic acids, myristic acid, linoleic acid, and the like. Anhydrides, when available, and lower alkyl esters of these acids also can be used. Mixtures of two or more such agents can also be successfully used. An extensive discussion of such acids is found in Kirk-Othmer «Encyclopedia of Claimed Technology» 2nd Edition, 1965, John Wiley & Sons, N.Y., pages 811-856. Acylating agents including acetic acid, propionic acid, butyric acid, acrylic and benzoic acid as well as their anhydrides and lower alkyl esters.

Among the useful lower Mw polycarboxylic acylating agents are maleic acid, fumaric acid, itaconic acid, mesaconic acid, succinic acid, phthalic acid, alkyl-substituted phthalic acids, malonic acid, glutaric acid, adipic acid, citraconic acid, glutaconic acid, chloromaleic acid, ascorbic acid. Again anhydrides, when available, and lower alkyl esters and esters of these acids can be used as lower Mw acylating agents.

Certain substituted succinic acid and anhydride lower Mw acylating agents can also be used. A number of these are discussed in the above-cited Kirk-Othmer article at pages 847-849. Such acylating agents can typically be represented by the formula:

$$\begin{array}{l} R^*\text{—}CHCO_2H \\ \quad\quad\ | \\ \quad\quad CH_2CO_2H \end{array}$$

wherein R* is a $C_1$ to $C_{10}$ hydrocarbyl group. Preferably, R* is an aliphatic or alicyclic hydrocarbyl group less than 10% of its carbon-to-carbon bonds unsaturated. Examples of such groups are 4-butyl-cyclohexyl, di(isobutyl), decyl. The production of such substituted succinic acids and their derivatives via alkylation of maleic acid or its derivatives with a halohydrocarbon is well known to those of skill in the art and need not be discussed in detail at this point.

Acid halides of the aforedescribed lower Mw mono- and polycarboxylic acids can be used as lower Mw acylating agents in this invention. These can be prepared by the reaction of such acids or their anhydrides with halogenating agents such as phosphorus tribromide, phosphorus pentachloride, phosphorus oxychloride, or thionyl chloride. Esters of such acids can be prepared simply by the reaction of the acid, acid halide or anhydride with an alcohol or phenolic compound. Particularly useful are the lower alkyl and alkenyl alcohols such as methanol, ethanol, alkyl alcohol, propanol, cyclohexanol. Esterification reactions are usually promoted by the use of alkaline catalysts such as sodium hydroxide or alkoxide, or an acidic catalyst such as sulfuric acid or toluene sulfonic acid.

The dispersant salt composition is formed by the reaction of the acid (A) with the carboxylic solubilizer (B). Although the reaction can be carried out at room temperature, it is often desirable to heat the reactants to promote the reaction rate. Generally, a temperature from 0°C to 150°C desirably from 15 to 100°C and preferably from 25 to 80°C is utilized.

The amount of acid is generally not critical and excess amounts of acids can be utilized. Generally, at least 0.5 equivalents of acid can be utilized per mole of said carboxylic solubilizer (B) with usually at least 1 equivalent of acid being utilized. The phosphorus-free carboxylic solubilizers are reacted through addition of a hydrogen atom on a free amine of the (B2) poly(alkyleneamine). The dispersant salt composition being the reaction product of (A) and (B) produces a salt which is dispersable in an aqueous phase. Usually the dispersant salt is almost infinitely dilutable in water.

The dispersant salts of the present invention are utilized in association with a surfactant. Not only does the surfactant serve to reduce the viscosity of the salt dispersion composition, but also aids in dispersing or solubilizing any particles or fluids. The surfactants also generally imparts stability to the aqueous phase. At least 5 parts by weight of surfactant is utilized per 100 parts by weight of said dispersant salt composition in order to add stability to the system as well as to improve the water solubility of the dispersant salt with at least 20 parts by weight being desired. The amount of surfactant based upon a percentage can be from 5% by weight to 95% by weight.

The surfactant is usually hydrophilic and can be of the cationic, anionic, or non-ionic type. Many such surfactants of each type are known to the art. See, for example, McCutcheon's «Detergents and Emulsifiers», 1978, North American Edition, published by McCutcheon's Division, MC Publishing Corporation, Glen Rock, N.J., U.S.A., particularly pages 17-33.

Of these surfactants, non-ionic surfactants are generally used. A number of non-ionic surfactant types are known. Among these are the alkylene

oxide-treated products, such as ethylene oxide-treated phenols, alcohols, esters, amines and amides. Ethylene oxide/propylene oxide block copolymers are also useful non-ionic surfactants. Glycerol esters and sugar esters are also known to be non-ionic surfactants. A typical non-ionic surfactant class useful with the derivatives of the present invention are the alkylene oxide-treated alkyl phenols such as the ethylene oxide alkyl phenol condensates sold by the Rohm & Haas Company. A specific example of these is Triton® X-100 which contains an average of 9-10 ethylene oxide units per molecule, has an HLB value of about 13.5 and a molecular weight of about 628. Many other suitable non-ionic surfactants are known; see, for example, the aforementioned McCutcheon 's as well as the treatise «Non-ionic Surfactants» edited by Martin J. Schick, M. Drekker Co., New York, 1967.

As noted above, cationic and anionic surfactants can also be used in combination with the solubilizers (A) in this invention. Generally, the surfactants are hydrophilic. Anionic surfactants containing negatively charged polar groups while cationic surfactants contain positively charged polar groups. A general survey of useful surfactants is found on Kirk-Othmer Encyclopedia of Chemical Technology, Second Edition, Volume 19, page 507 and following (1969, John Wiley and Son, New York) and the aforementioned compilation published under the name of McCutcheon's.

Among the useful anionic surfactant types are the widely known metal carboxylate soaps, organo sulfates, sulfonates, sulfocarboxylic acids and their salts, and phosphates. Useful cationic surfactants include nitrogen compounds such as amine oxides and the well known quaternary ammonium salts. Amphoteric surfactants include acid type materials and similar types. Various cationic and anionic dispersants are available from the industry, particularly from such companies as Rohm and Haas and Union Carbide Corporation, both of America. Further information about anionic and cationic surfactants also can be found in the texts «Anionic Surfactants», Parts II and III, edited by W.M. Linfield, published by Marcel Dekker, Inc., N.Y. 1976 and «Cationic Surfactants», edited by E. Jungermann, Marcel Dekker, Inc., N.Y., 1976.

A hydrophilic organic solvent is utilized in combination with a surfactant to help stabilize the system. The amount of hydrophilic solvent utilized will generally vary with regard to the type of dispersant salt but it should be at least 5% by weight, based on the weight of the dispersant salt composition, and desirably at least 10% by weight. Hydrophilic solvents are known to the art. Desirably, the solvent is an oxygenated solvent. One class of oxygenated solvents include the mono and dialkyl ethers of ethylene glycol and their derivatives. Specific examples include ethylene glycol monobutyl ether, ethylene glycol monobutyl ether acetate, ethylene glycol monoethyl ether acetate, ethylene glycol monoethyl ether, ethylene glycol dibutyl ether, ethylene glycol monohexyl ether, ethylene glycol monomethyl ether, ethylene glycol monomethyl ether acetate, and ethylene glycol monophenyl ether. These types of solvents are generally available under the registered trademark of Cellosolve and are made by the Union Carbide Corporation. Another class of oxygenated solvents are the various aliphatic alcohols such as allyl alcohol, and the various soluble alkanols having from 1 to 4 carbon atoms such as methyl alcohol, ethyl alcohol, propyl alcohol, isopropyl alcohol, and tert-butyl alcohol. The ketones from another class of oxygenated solvents and thus, acetone and methyl ethyl ketone can be utilized. Also, the various soluble aclohols of ketones such as diacetone alcohols can be utilized. These and other types of hydrophilic organic solvents can be used in place of, or in combination with the various surfactants.

Aqueous compositions of the present invention may contain an amount of water therein such that an invert emulsion or other system is formed wherein the water is in the discontinuous phase, or wherein the water forms a continuous phase. Naturally, the actual amount of water utilized to form an invert emulsion or form a continuous phase will vary depending upon the type of surfactant, the type of hydrophilic organic solvent, the type of dispersant salt, and the like. Oftentimes the type of solution formed depends upon the desired concentration in water.

The dispersant salt composition in association with water keeps or maintains in solution various particles or fluids. Generally, any type of particle desired to be suspended or dispersed, can be utilized. Examples include the various clays, various talcs, various types of coal, various types of sulfur, various types of silica, pigments, fillers, and fibers. The dispersant composition is especially suitable in suspending undesirable particles such as soot and especially carbon black soot. That is, during the manufacture of carbon black, soot is inexorably produced as a by-product. Heretofore, since it was virtually impossible to separate out the soot, it is generally slurried in a water solution of molasses or lignosulfonates and dried. However, during drying, the molasses or lignosulfonates would degrade and produce carbon black pellets which do not readily redisperse. According to the present invention, the carbon black soot can readily be dispersed by the dispersant salt composition. Upon drying, a non-dust, free flowing, higly dispersed carbon black composition is produced. Particles such as carbon black are generally highly desired in various products such as tires, roofing materials, pigments. Another type of particle is the fiber, often of a small size when it is desirable that they be supended or dispersed in a solution. Thus, the dispersant salt composition of the present invention can be utilized in pulping operations whenever it is desirable to maintain cellulosic particles or plastics in solution. Examples of other fibers include glass, that is, fiberglass, polyester, nylon, carbon fibers, rayon, polypropylene. With regard to fluids, various liquids such as dyes, oils, and the like can be kept in solution. Moreover, various gases such as carbon dioxide, and the like can be kept in solutions such as in a foam.

Accordingly, the dispersant salt along with the surfactant and hydrophilic organic solvent can be utilzed whenever it is desirable to disperse or maintain particles or fluids in an aqueous solution.

The following examples describe the preparation of the dispersant salts used in the present invention:

*Example 1*

To a one liter vessel was added 240 grams of polyisobutenyl succinic tetraethylene pentamine, 12 grams of formic acid, and 64 grams of Triton® X-100, a surfactant. The mixture was heated with stirring to 85°C. Then, 444 grams of water was slowly added over a period of hours, as from 2 to 4 hours while maintaining the temperature at 85°C. The mixture is then cooled to room temperature with stirring. The desired dispersant salt was obtained.

*Example 2*

In a manner similar to Example 1, utilizing the same ingredients except for the acid which was concentrated hydrochloric acid, a desired dispersant salt was made. The amount of the carboxylic solubilizer was 150 grams, the amount of concentrated HCl was 13 grams, the amount of the surfactant was 40 grams and the amount of water added over a period of time was 178 grams.

*Example 3*

In a manner similar to Example 1 except for the acid which was acetic acid, a desired dispersant salt was made. The amount of the carboxylic solubilizer was 600 grams, the amount of the acetic acid was 30 grams, the amount of the surfactant was 160 grams, and the amount of water added over a period of time was 1,110 grams.

*Example 4*

In a manner similar to Example 1, a dispersant salt was made. In lieu of a surfactant, a hydrophilic or organic solvent was utilized. Specifically, 840 grams of the carboxylic solubilizer of Example 1, 420 grams of butyl cellosolve and 21 grams of acetic acid was utilized. These three components were heated to approximately 85°C for a short period of time with mixing. The desired dispersant salt was obtained. Then, 15 grams of the salt was added to the vessel and 85 grams of water added thereto with mixing. A clear amber solution was obtained.

*Example 5*

In a manner similar to Example 1, 5 grams of the carboxylic solubilizer set forth in Example 1, 5 grams of butyl cellosolve and 1 gram of acetic acid were heated and mixed with 39 grams of water slowly added thereto. The desired dispersant salt was obtained. After 24 hours, the solution was still clear.

*Example 6*

In a manner exactly identical to that of Example 5, having the same formulation except that 2.5 grams of acetic acid was utilized, a dispersant salt was made. The additional amount of acid still yield a clear solution which was still clear after 24 hours.

All of the above solutions of examples 1-6 had good stability in that after standing for at least one day, no noticeable separation of the ingredients occurred.

*Example 7*

In a manner similar to Example 1, 5 grams of the carboxylic solubilizer set forth in Example 1, and 10 grams of Butyl Cellosolve were heated and mixed. No acid was utilized. Then 35 grams of tap water was added over a short period of time with continued heating. This solution was then allowed to cool. After 6 hours noticeable separation had occurred.

Thus, it is readily apparent that when an acid is not utilized, a suitable dispersant salt is not obtained.

The various dispersant salts set forth in Examples 1 through 6 were mixed with soot containing carbon black. The amount of the dispersant solution including the water was approximately 4% by weight with the amount of carbon black being approximately 96% by weight. After thoroughly mixing the ingredients, the mixture was dried at approximately 230 to 260°C (450 to 500°F). The remaining carbon black mixture was a very fine size but did not contain any powder or dust therein. Moreover, it was free flowing. Thus, the highly dispersed carbon black system with regard to each of the dispersant salts was produced.

Although, as set forth above, the amount of water can vary over a wide range to form the aqueous system, oftentime the system will contain a small amount of water. Thus the aqueous system can contain at least 20% by weight of water, and more desirably at least 40% by weight. Hence, concentrated or water aqueous systems can be formed.

These concentrates and water-based aqueous systems can optionally include other conventional additives commonly employed in water-based functional fluids. These other additives include functional additives, corrosion-inhibitors, shear stabilizing agents, bactericides, dyes, water-softeners, odor masking agents, anti-foam agents.

The concentrates are analogous to the water-based functional fluids except that they contain less water and proportionately more of the other ingredients. The concentrates can be converted to water-based functional fluids by dilution with water. This dilution is usually done by standard mixing techniques. This is often a convenient procedure since the concentrate can be shipped to the point of use before additional water is added. Thus, the cost of shipping a substantial amount of the water in the final water-based functional fluid is saved. Only the water necessary to formulate the concentrate (which is determined primarily by ease of handling and convenience factors), need be shipped.

Also included within the invention are methods for preparing aqueous systems, including both concentrates and water-based functional fluids, containing other conventional additives commonly employed in water-based functional fluids. These methods comprise the steps of:

(1) mixing the composition of the invention with such other conventional additives either simultaneously or sequentially to form a dispersion or solution; optionally

(2) combining said dispersion or solution with water to form said aqueous concentrate; and/or

(3) diluting said dispersion or solution, or concentrate with water wherein the total amount of water

used is in the amount required to provide the desired concentration of the composition of the invention and other functional additives in said concentrates or said water-based functional fluids.

These mixing steps are carried out using conventional equipment and generally at room or slightly elevated temperatures, usually below 100°C and often below 50°C. As noted above, the concentrate can be formed and then shipped to the point of use where it is diluted with water to form the desired water-based functional fluid. In othere instances the finished water-based functional fluid can be formed directly in the same equipment used to form the concentrate or the dispersion or solution.

The functional additives that can be used are typically oil-soluble, water-insoluble additives which function in conventional oil-based systems as E.P. agents, anti-wear agents, load-carrying agents, friction modifiers, lubricity agents, etc. They can also function as anti-slip agents, film formers and friction modifiers. As is well known, such additives can function in two or more of the above-mentioned ways; for example, E.P. agents often function as load- carrying agents.

The term «oil-soluble, water-insoluble functional additive» refers to a functional additive which is not soluble in water above a level of 1 gram per 100 milliliters of water at 25°C, but is soluble in mineral oil to the extent of at least 1 gram per liter at 25°C.

These functional additives can also include certain solid lubricants such as graphite, molybdenum disulfide and polytetrafluoroethylene and related solid polymers.

These functional additives can also include frictional polymer formers. Briefly, these are potential polymer forming materials which are dispersed in a liquid carrier at low concentration and which polymerize at rubbing or contacting surfaces to form protective polymeric films on the surfaces. The polymerizations are believed to result from the heat generated by the rubbing and, possibly, from catalytic and/or chemical action of the freshly exposed surface. A specific example of such materials is dilinoleic acid and ethylene glycol combinations which can form a polyester frictional polymer film. These materials are known to the art and descriptions of them are found, for example, in the journal «Wear», Volume 26, pages 369-392, and West German Published Patent Application 2 339 065.

Typically these functional additives are known metal or amine salts of organo sulfur, phosphorus, boron or carboxylic acids which are the same as or of the same type as used in oil-based fluids. Typically such salts are of carboxylic acids of 1 to 22 carbon atoms including both aromatic and aliphatic acids; sulfur acids such as alkyl and aromatic sulfonic acids and the like; phosphorus acids such as phosphoric acid, phosphorus acid, phosphinic acid, acid phosphate esters and analogous sulfur homologs such as the thiophosphoric and dithiophospohonic acid and related acid esters; boron acids include boric acid, acid borates and the like. Useful functional additives also include metal dithiocarbamates such as molybdenum and antimony dithiocarbamates; as well as dibutyl tin sulfide, tributyl tin oxide, phosphates and phosphites; borate amine salts, chlorinated waxes; trialkyl tin oxide, molybdenum phosphates, and chlorinated waxes.

Mainly such functional additives are known to the art. For example, descriptions of additives useful in conventional oil-based systems and in the aqueous systems of this invention are found in «Advances in Petroleum Chemistry and Refining», Volume 8, edited by John J. McKetta, Interscience Publishers, New York, 1963, pages 31-38 inclusive; Kirk-Othmer «Encyclopedia of Chemical Technology», Volume 12, Second Edition, Interscience Publishers, New York, 1967, page 575 et seq.; «Lubricant Additives» by M.W. Ranney, Noyes Data Corporation, Park Ridge, N.J., U.S.A., 1973; and «Lubricant Additives» by C.V. Smalheer and R.K. Smith, The Lezius-Hiles Co., Cleveland, Ohio, U.S.A.

In certain of the typical aqueous systems of the invention, the functional additive is a sulfur or chlorosulfur E.P. agent, known to be useful in oil-base systems. Such materials include chlorinated aliphatic hydrocarbons, such as chlorinated wax; organic sulfides and polysulfides, such as benzyldisulfide, bis-(chlorobenzyl)disulfide, dibutyl tetrasulfide, sulfurized sperm oil, sulfurized methyl ester of oleic acid, sulfurized alkylphenol, sulfurized dipentene, sulfurized terpene, and sulfurized Diels-Alder adducts; phosphosulfurized hydrocarbons, such as the reaction products of phosphorus sulfide with turpentine or methyl oleate; phosphorus esters such as the dihydrocarbon and trihydrocarbon phosphites, i.e., dibutyl phosphite, diheptyl phosphite, dicyclohexyl phosphite, pentylphenyl phosphite, dipentylphenyl phosphite, tridecyl phosphite, distearyl phosphite and polypropylene substituted phenol phosphite; metal thiocarbamates, such as zinc dioctyldithiocarbamate and barium heptylphenol dithiocarbamate; and Group II metal salts of phosphorodithioic acid, such as zinc dicyclohexyl phosphorodithioate, and the zinc salts of a phosphorodithioic acid.

The functional additive can also be a film former such as a synthetic or natural latex or emulsion thereof in water. Such latexes include natural rubber latexes and polystyrene butadienes synthetic latex.

The functional additive can also be an anti-chatter or anti-squawk agent. Exmaples of the former are the amide metal dithiophosphate combinations such as disclosed in West German Patent 1 109 302; amine salt-azomethene combinations such as disclosed in British Patent Specification 893 977; or amine dithiophosphate such as disclosed in U.S. Patent 3 002 014. Examples of anti-squawk agents are N--acyl-sarcosines and derivatives thereof such as disclosed in U.S. Patents 3 156 652 and 3 156 653; sulfurized fatty acids and esters thereof such as disclosed in U.S. Patents 2 913 415 and 2 982 734; and esters of dimerized fatty acids such as disclosed in U.S. Patent 3 039 967.

Specific examples of functional additives useful in the aqueous dispersions of this invention include the following commercially available products.

TABLE I

| Functional Additive Registered Trade-mark | Chemical Description | Supplier |
|---|---|---|
| Anglamol 32 | Chlorosulfurized hydrocarbon | Lubrizol[1] |
| Anglamol 75 | Zinc dialkyl phosphate | Lubrizol[1] |
| Molyvan L | A thiaphos-phomolybdate | Vanderbilt[2] |
| Lubrizol-5315 | Sulfurized cyclic carboxylate ester | Lubrizol[1] |
| Emcol TS 230 | Acid phosphate ester | Witco[3] |

[1] The Lubrizol Corporation, Wickliffe, Ohio, U.S.A.
[2] R.T. Vanderbilt Company. Inc., New York, N.Y., U.S.A.
[3] Witco Chemical Corp., Organics Division, Houston, Texas, U.S.A.

Mixtures of two or more of any of the afore-described functional additives can also be used.

Typically, a functionally effective amount of the functional additive is present in the aqueous dispersions of this invention. For example, if the functional additive is intended to serve primarily as a load-carrying agent, it is present in a load-carrying amount.

The aqueous systems of this invention often contain at least one inhibitor for corrosion of metals. These inhibitors can prevent corrosion of either ferrous or non-ferrous metals (e.g., copper, bronze, brass, titanium, aluminum) or both. The inhibitor can be organic or inorganic in nature. Usually it is sufficiently soluble in water to provide a satisfactory inhibiting action though it can function as a corrosion-inhibitor without dissolving in water and it need not be water-soluble. Many suitable inorganic inhibitors useful in the aqueous systems of the present invention are known to those skilled in the art. Included are those described in «Protective Coatings for Metals» by Burns and Bradley, Reinhold Publishing Corporation, Second Edition, Chapter 13, pages 596-605.

Specific examples of useful inorganic inhibitors include alkali metal nitrites, sodium di- and tripolyphosphate, potassium and dipotassium phosphate, alkali metal borate and mixtures of the same. Many suitable organic inhibitors are known to those of skill in the art. Specific examples include hydrocarbyl amine and hydroxy-substituted hydrocarbyl amine neutralized acid compound, such as neutralized phosphates and hydrocarbyl phosphate esters, neutralized fatty acids (e.g., those having 8 to 22 carbon atoms), neutralized aromatic carboxylic acids (e.g., 4-tertiarybutyl benzoic acid), neutralized naphthenic acids and neutralized hydrocarbyl sulfonates. Mixed salt esters of alkylated succinimides are also useful. Particularly useful amines include the alcohol amines such as ethanol amine, diethanol amine. Mixtures of two or more of any of the afore-described corrosion-inhibitors can also be used. The corrosion-inhibitor is usually present in concentrations in which they are effective in inhibiting corrosion of metals with which the aqueous composition comes in contact.

Certain of the aqueous systems of the present invention (particularly those that are used in cutting or shaping of metal) can also contain at least one polyol with inverse solubility in water. Such polyols are those that become less soluble as the temperature of the water increases. They thus can function as surface lubricity agents during cutting or working operations since, as the liquid is heated as a result of friction between a metal workpiece and worktool, the polyol of inverse solubility «plates out» on the surface of the workpiece, thus improving its lubricity characteristics.

The aqueous systems of the present invention can also include at least one bacteriocide. Such bacteriocides are well known to those of skill in the art and specific examples can be found in the aforementioned McCutcheon publication «Functional Materials» under the heading «Antimicrobials» on pages 9-20 thereof.

Generally, these bacteriocides are water-soluble, at least to the extent to allow them to function as bacteriocides.

The aqueous systems of the present invention can also include such other materials as dyes, e.g., an acid green dye; water softeners, e.g., ethylene diamine tetraacetate sodium salt or nitrilo triacetic acid; odor masking agents, e.g., citronella, oil of lemon, and the like; and anti-foamants, such as the well-known silicone anti-foamant agents.

The aqueous systems of this invention may also include an anti-freeze additive where it is desired to use the composition at a low temperature. Materials such as ethylene glycol and analogous polyoxyalkylene polyols can be used as anti-freeze agents. Clearly, the amount used will depend on the degree of anti-freeze protection desired and will be known to those of ordinary skill in the art.

It should also be noted that many of the ingredients described above for use in making the aqueous systems of this invention are industrial products which exhibit or confer more than one property on such aqueous systems. Thus, a single ingredient can provide several functions thereby eliminating or reducing the need for some other additional ingredient. Thus, for example, an E.P. agent such as tributyl tin oxide can also function as a bacteriocide.

## Claims

1. An aqueous dispersion, comprising:

water;

a dispersant salt composition comprising the reaction product of an acid (A) and a solubilizer (B), wherein;

(A) is a mineral acid or a sulfonic acid-free organic acid, and

(B) is a phosphorus-free carboxylic solubilizer made by reacting (B1) and (B2), wherein (B1) is

polycarboxylic acid acylating agent having a hydrocarbon-based substituent containing 30 to 500 carbon atoms, and (B2) is a poly-(alkyleneamine); and

an additional component comprising a surfactant present in an amount of at least 5 parts by weight per hundred parts by weight of the dispersant salt composition, together with a hydrophilic organic solvent present in an amount of at least 5% by weight based on the weight of the dispersant salt composition.

2. An aqueous dispersion as claimed in claim 1, wherein the surfactant is a non-ionic surfactant having HLB of about 13.5.

3. An aqueous dispersion as claimed in claim 1 or 2, wherein the hydrophilic organic solvent is an oxygenated hydrophilic organic solvent present in an amount of at least 10% by weight based on the weight of the dispersant salt composition.

4. An aqueous dispersion as claimed in any preceding claim, wherein the hydrocarbon-based substituent is derived from an olefinic polymer or chlorinated analog thereof.

5. An aqueous dispersion as claimed in any preceding claim, wherein the hydrocarbon-based substituent is derived from monoolefinic monomers which are polymerizable.

6. An aqueous dispersion as claimed in claim 5, wherein the hydrocarbon-based substituent is a polyolefin which includes polyisobutene.

7. An aqueous dispersion as claimed in claim 6, wherein the polyolefin includes polyisobutene which has an isobutene repeating monomer unit present in an amount of 80% based on the total number of repeated monomer units within the polymer.

8. An aqueous dispersion as claimed in any preceding claim, wherein the polycarboxylic acid acylating agent (B1) is polyisobutenyl succinic anhydride.

9. An aqueous dispersion as claimed in any preceding claim, further comprising:

a corrosion inhibitor present in an amount sufficient to prevent the corrosion of a metal.

10. An aqueous dispersion as claimed in any preceding claim, further comprising particles dispersed therein, the particles being selected from carbon black particles, pigment particles, fibers, filler particles and combinations thereof.

11. An aqueous dispersion as claimed in claim 10, wherein the particles are particles of carbon black dispersed within the dispersion in a homogeneous phase.

12. A process for the preparation of an aqueous dispersion, which comprises preparing a mixture comprising:

water;

a dispersant salt composition comprising the reaction product of an acid (A) and a solubilizer (B), wherein;

(A) is a mineral acid or a sulfonic acid-free organic acid, and

(B) is a phosphorus-free carboxylic solubilizer made by reacting (B1) and (B2), wherein (B1) is polycarboxylic acid acylating agent having a hydrocarbon-based substituent containing 30 to 500 carbon atoms, and (B2) is a poly-(alkyleneamine); and

an additional component present in an amount to impart stability to a continuous aqueous phase, the additional component including a surfactant present in an amount of at least 5 parts by weight per hundred parts by weight of the dispersant salt composition, and a hydrophilic organic solvent present in an amount of at least 5% by weight based on the weight of the dispersant salt composition.

**Patentansprüche**

1. Wäßrige Dispersion, umfassend:

Wasser,

ein dispergierendes Salzgemisch, umfassend das Reaktionsprodukt einer Säure (A) und eines Lösungsvermittlers (B), wobei

(A) eine Mineralsäure oder eine Sulfonsäure-freie organische Säure, und

(B) ein Phosphor-freier Carboxylgruppen-haltiger Lösungsvermittler ist, hergestellt durch Umsetzung von (B1) mit (B2), wobei (B1) ein Polycarbonsäure-Acylierungsmittel mit einem Kohlenwasserstoff-Substituenten mit 30 bis 500 Kohlenstoffatomen und (B2) ein Polyalkylenamin ist,

sowie eine zusätzliche Komponente, umfassend ein Tensid in einer Menge von mindestens 5 Gewichtsteilen pro 100 Gewichtsteile des dispergierenden Salzgemisches zusammen mit einem hydrophilen organischen Lösungsmittel, in einer Menge von mindestens 5 Gewichtsprozent, bezogen auf das Gewicht des dispergierenden Salzgemisches.

2. Wäßrige Dispersion nach Anspruch 1, wobei das Tensid ein nicht-ionisches Tensid mit einem HLB-Wert von etwa 13,5 ist.

3. Wäßrige Dispersion nach Anspruch 1 oder 2, wobei das hydrophile organische Lösungsmittel ein Sauerstoff-haltiges hydrophiles organisches Lösungsmittel in einer Menge von mindestens 10 Gew.-%, bezogen auf das dispergierende Salzgemisch, ist.

4. Wäßrige Dispersion nach einem der vorhergehenden Ansprüche, wobei der Kohlenwasserstoff-Substituent von einem Olefin-Polymer oder einem chlorierten Analogen davon abgeleitet ist.

5. Wäßrige Dispersion nach einem der vorhergehenden Ansprüche, wobei der Kohlenwasserstoff-Substituent von polymerisierbaren Monoolefin-Monomeren abgeleitet ist.

6. Wäßrige Dispersion nach Anspruch 5, wobei der Kohlenwasserstoff-Substituent ein Polyolefin einschließlich Polyisobuten ist.

7. Wäßrige Dispersion nach Anspruch 6, wobei das Polyolefin Polyisobuten einschließt mit 80% Isobuten-Einheiten, bezogen auf die Gesamtzahl der Monomer-Einheiten im Polymer.

8. Wäßrige Dispersion nach einem der vorhergehenden Ansprüche, wobei das Polycarbonsäure-Acylierungsmittel (B1) Polyisobutenylbernsteinsäureanhydrid ist.

9. Wäßrige Dispersion nach einem der vorhergehenden Ansprüche, weiter umfassend:

einen Korrosionsinhibitor in einer zur Verhinderung der Korrosion von Metall ausreichenden Menge.

10. Wäßrige Dispersion nach einem der vorhergehenden Ansprüche, weiter umfassend darin dispergierte Partikel, wobei die Partikel Rußpartikel, Pigmentpartikel, Fasern, Füllstoffpartikel oder Kombinationen davon sind.

11. Wäßrige Dispersion nach Anspruch 10, wobei die Partikel in der Dispersion in einer homogenen Phase dispergierte Rußpartikel sind.

12. Verfahren zur Herstellung einer wäßrigen Dispersion, umfassend die Herstellung einer Mischung aus Wasser,

einem dispergierenden Salzgemisch, umfassend das Reaktionsprodukt einer Säure (A) und eines Lösungsvermittlers (B), wobei

(A) eine Mineralsäure oder eine Sulfonsäure-freie organische Säure, und

(B) ein Phosphor-freier Carboxylgruppen-haltiger Lösungsvermittler ist, hergestellt durch Umsetzung von (B1) mit (B2), wobei (B1) ein Polycarbonsäure-Acylierungsmittel mit einem Kohlenwasserstoff-Substituenten mit 30 bis 500 Kohlenstoffatomen und (B2) ein Polyalkylenamin ist,

sowie einer zusätzlichen Komponente, die in einer der kontinuierlichen wäßrigen Phase Stabilität verleihenden Menge vorhanden ist, wobei die zusätzliche Komponente ein Tensid in einer Menge von mindestens 5 Gewichtsteilen pro 100 Gewichtsteile des dispergierenden Salzgemisches und ein hydrophiles organisches Lösungsmittel, in einer Menge von mindestens 5 Gewichtsprozent, bezogen auf das Gewicht des dispergierenden Salzgemisches, enthält.

**Revendications**

1. Dispersion aqueuse, comprenant:

de l'eau;

une composition de sel dispersant comprenant le produit de réaction d'un acide (A) et d'un solubilisant (B), dans laquelle:

(A) est un acide minéral ou un acide organique exempt d'acide sulfonique, et

(B) est un solubilisant carboxylique sans phosphore préparé par réaction de (B1) et (B2), où (B1) est un agent d'acylation de type acide polycarboxylique comportant un substituant à base hydrocarbonée contenant 30 à 500 atomes de carbone, et (B2) est une poly(alkylèneamine); et

un constituant supplémentaire comprenant un tensioactif présent en une quantité d'au moins 5 parties en poids pour 100 parties en poids de la composition de sel dispersant, avec un solvant organique hydrophile présent en une quantité d'au moins 5% en poids par rapport au poids de la composition de sel dispersant.

2. Dispersion aqueuse selon la revendication 1, dans laquelle le tensioactif est un tensioactif non ionique ayant un RHL d'environ 13,5.

3. Dispersion aqueuse selon la revendication 1 ou 2, dans laquelle le solvant organique hydrophile est un solvant organique hydrophile oxygéné présent en une quantité d'au moins 10% en poids, par rapport au poids de la composition de sel dispersant.

4. Dispersion aqueuse selon l'une quelconque des revendications précédentes, dans laquelle le substituant à base hydrocarbonée est dérivé d'un polymère oléfinique ou d'un de ses analogues chlorés.

5. Dispersion aqueuse selon l'une quelconque des revendications précédentes, dans laquelle le substituant à base hydrocarbonée est dérivé de monomères monooléfiniques qui sont polymérisables.

6. Dispersion aqueuse selon la revendication 5, dans laquelle le substituant à base hydrocarbonée est une polyoléfine qui comprend un polyisobutène.

7. Dispersion aqueuse selon la revendication 6, dans laquelle la polyoléfine comprend un polyisobutène qui comporte un motif monomère récurrent isobutène présent en une quantité de 80% par rapport au nombre total de motifs monomères récurrent au sein du polymère.

8. Dispersion aqueuse selon l'une quelconque des revendications précédentes, dans laquelle l'agent d'acylation acide polycarboxylique (B1) est un anhydride polyisobuténylsuccinique.

9. Dispersion aqueuse selon l'une quelconque des revendications précédentes, comprenant en outre: un inhibiteur de corrosion présent en une quantité suffisante pour empêcher la corrosion d'un métal.

10. Dispersion aqueuse selon l'une quelconque des revendications précédentes, comprenant en outre des particules dispersées, les particules étant choisies parmi des particules de noir de carbone, des particules de pigment, des fibres, des particules de charge et leurs combinaisons.

11. Dispersion aqueuse selon la revendication 10, dans laquelle les particules sont des particules de noir de carbone dispersées au sein de la dispersion en une phase homogène.

12. Procédé de préparation d'une dispersion aqueuse, qui comprend la préparation d'un mélange comprenant:

de l'eau;

une composition de sel dispersant comprenant le produit de réaction d'un acide (A) et d'un solubilisant (B), dans laquelle:

(A) est un acide minéral ou un acide organique exempt d'acide sulfonique, et

(B) est un solubilisant carboxylique sans phosphore préparé par réaction de (B1) et (B2), où (B1) est un agent d'acrylation de type acide polycarboxylique comportant un substituant à base hydrcarbonée contenant 30 à 500 atomes de carbone, et (B2) est une poly(alkylèneamine); et

un constituant supplémentaire présent en une quantité conférant de la stabilité à une phase aqueuse continue, le constituant supplémentaire comprenant un tensioactif présent en une quantité d'au moins 5 parties en poids pour 100 parties en poids de la composition de sel dispersant, avec un solvant organique hydrophile présent en une quantité d'au moins 5% en poids par rapport au poids de la composition de sel dispersant.